# EUROPEAN PATENT APPLICATION

(11) **EP 0 777 364 A2**
(43) Date of publication of application: **04.06.1997**
(21) Application number: 96500136.5
(22) Date of filing: 17.10.1996
(51) Int. Cl.: H04L 12/56

(54) **A structure for an electronic information system**

(30) Priority: 30.11.1995 ES 9502378
(71) Applicant: TELEFONICA DE ESPANA, S.A., 28013 Madrid (ES)
(72) Inventor: Dato Solis, Juan, 28043 Madrid (ES); Cruz Medina, Victor, 28043 Madrid (ES)
(74) Representative: Sanchez del Campo Gonzalez de Ubierna, Ramon

(57) **Abstract**

A structure for an Electronic Information System, consisting of a new electronic information system unifying the connection to any of the at present existing services, and providing the suppliers with access means to the user, without any need for an own underlying structure.

## Description

### BACKGROUND OF THE INVENTION

The present specification refers to a request for a Patent of Invention application related to a Structure for an Electronic Information System, specifically as a structure for an access system to suppliers of information, unifying the connection to any of at present, existing services, and providing the suppliers with access means to a user, without any need for having an own underlying structure.

### FIELD OF THE INVENTION

This invention has an application in the field of the telecommunications, and specifically in the underlying structure which is necessary in order to provide a user with the electronic information services existing now.

### RELATED ART

The Applicant knows several electronic information services such as, namely:
- Several BBS access systems, having a greater or lesser complexities in their informative structure.
- Vidiotex services, such as Ibertex or Minitel.
- Information systems with access to Internet, such as those internationally supplied by Compuserve, America Online or IBM, or having a domestic scope, such as Servicom or Goya.
- Systems with access to Internet, through the videotex system, as that provided by Alcatel-Bell.
- Microsoft Network, recently presented by Microsoft as an worldwide network of information, and so on.

Nevertheless, there is no system providing a unified access to these services, and capable of securing also an access to Internet through a great number of suppliers, keeping a neutrality, so that a user can have an IP address (Internet Protocol) with regard to said service.

### SUMMARY OF THE INVENTION

The structure for an Electronic Information System of the invention constitutes, per se, an evident novelty in the field of application of same, since the own structure allows to unify the access to said information services, giving also access to Internet by an assignment of the IP (Internet Protocol) address to the user.

The improvements contemplated in this invention ir relation to the state of the art as regard this matter, are well evident if the advantages of their implantation are contemplated, both from the point of view of the user utilizing the system:
- Unification and standardization in the access to the electronic information services, that is to say, having a single number of telephone it is possible to accede to all the services.
- Possibility of knowing the characteristics of the services, the billing system used in each of them, the requirements of the user (hardware and software), etc.
- Possibility of acceding to different CPI with any communications packages of a market having low costs of navigation, the cost of navigation access being provided by each service, defined according to a flexible manner by each supplier, the charges corresponding to the user's credit card being fulfilled.
- To increase a competition amongst suppliers (price, amount and quality of service), since the user, before being connected to a service, can know, through consultation with the CPI of suppliers, all the existing offers at that moment, and to choose that most advantageous for his needs.
- A connection to several networks through different interfaces and signaling types, in a transparent way.
- A very competitive cost of navigation and access to the services required,
and from the point of view of the information supplier:
- Centralization of the request for information services, through a universal access.
- There is no need for the implementation of parallel networks, or underlying structures for said services, so avoiding these costs - and those related to the own operation and management of same.
- The answer time for marketing new services is reduced.
- The investment necessary for marketing high profitability services at a low cost is optimized,
and also from the point of view of the information system - operator:
- Potentation of his own networks.
- Incomes from the functions rendered (CPI of suppliers).
- A supply of his own information to the user, being incorporated to the system as it were another supplier.
- It is constituted as a carrier for the development of new - bussinesses, and as a full manager of services.

The structure of the Electronic Information System consists of several plainly defined components, namely:
- The user's terminals, forming a commercial equipment such as a personal computer, with a DOS operative system, Windows, OS/2 or a Macintosh unit, wherein it is installed on the software of access to the system.

In addition to the personal computer, the user needs either a modem for connecting through the Switched Telephine Network (STN), or a terminal adapter for connecting to an access line of the Digital Network of Integrated Services (DNIS).
- The User's Access Network allows for the access and connection of the user's PCs, both through the Switched Telephone Network (STN) and through the Digital Network of Integrated Services (DNIS), establishing a physical circuit with a Centre of Service (CSIV) via a transit network.
- The Centres of Service (CSIV) or nodes of the system are distributed according to geographical criteria.

Each of them consists of a series of segments of a Local Area Network (LAN), connected each other by means of a concentrator, so allowing several units of the Centre to be interconnected.
- Multiline units or switching matrices establishing, by the control of the Center main computer, temporal connections between the inlet channels from the user access networks and the outlet channels of each of the communications servants.

The establishment of a user channel is performed thru a signaling with which the access network and the CSIV communicate, this equipment performing an adaptation of the signal offered by the network and that treated by the communications servant.

The signaling is treated in an automatic way, informing it to the CSIV computer.
- Communications Servant, constituted by one or several units, one of them containing an assembly of modems necessary for treating analog connections, taking on the task of connecting the users with an internal LAN which allows the different CPIs to be acceded.

The communications servant sets in the connection stage to the system on the part of a user, a handshake with a CPI asking it to be assigned an IP (Internet Protocol) address of its own, and, later, it routes toward the access to the CPI all the IP trames (Internel Protocol) of the user.
- CSIV Central Computer, a commercial computer supervising the user access to the different CPI, making room, moreover, for the Supplier Information Centre.
- Local Installation Terminal, the function of which is to install and configure the CSIV, and all and every interacting units.
- Console for controlling the configuration and application of each multiline unit, directly connected to the computer of the Service Centre (CSIV).
- Routers for connecting via TPC/IP the CPIs and the Management Centre (MCIV).
- The Access Network of Centres Providing Information allows a connection to be established between the Centres of Service (CSIV) and different Centres Providing Information (CPI). Both the Package Switching Network and the Digital Network of Integrated Services can be used as an access network, as well as dedicated voice + data lines.
- The Management Centre (MCIV) is constituted by a Local Area Network (LAN), to which the following units are connected:
- A Host Computer of high process capacity and storage, supporting the remote management of the different Centres of Service - (CSIV) of the system.
- Management and Operation terminals, acting as consoles for carrying out local installation tasks.
- Local Installation terminals, acting as consoles for carrying out local installation tasks, and, therefore, are directly connected to the computers of the Centres of Service (CSIV).
- Terminals associated to the Information Supplier, allowing a remote access to the MCIV through the TCP/IP network, mounted on X.25.
- Underlying Structure units, assembly of inlet/outlet units, such as printers, ribban units, scanner, CD-ROM, etc.
- The software of the system, implemented on the different elements of this structure, composed of different modules included both in the User Terminal, and in the Centres of Service, the Management Centre, the terminals associated to the Suppliers and the Centres Providing Information.

In like manner, this structure for an information system incorporates a peculiar method of validation and assignment of user addresses, allowing the assignment of IP (Internet Protocol) addresses to the user during the whole connection through the suppliers choosen, which allows an important load to be alleviated - for the supplier servant, and an improvement in the access rate to the information for the user connected.

From a functional point of view, the mentioned elements are interconnected performing the following tasks, namely:

The User Terminal is a standard PC, to which an application of access to the information system is incorporated, so allowing two types of access or connection modalities:
1) The user can be connected through a PPP (Point to Point Protocol), with the corresponding centre of service, which will be assigned an IP (Internet Protocol) address, managed by the information system.
   In this modality, the user can establish a session with all the centres providing information (CPI) rendering a service under this modality, but not with those offering their service through the second modality, as described below.
2. The user is connected through a PPP (Point to Point Protocol) with the corresponding centre of service, showing, thru the protocol means, which centre providing information desires to be assigned the IP (Internet Protocol) address; the centre of service being a bridge between user and CPI, providing the user with the IP (Internet Protocol) address supplied by the centre providing the service and managing the own CPI.
   In this modality, the user can establish a session with the CPI supplying the address.

This way, a CPI can only render services through one of the two connection modalities, but, nevertheless, a same supplier can have two different CPIs on a same computerized unit, each with its connection modality.

The user does not need to have a previous subscription for acceding the system, since the payment for using the service is included in the telephone bill, with which a call to a number of the sysme means a tariff X per minute of connection.

Any user of theSTN can accede the system, independently of the type of the station (digital or analog) to which he is connected.

The function of the Centres of Service is to provide the users with an access to the existing CPIs. It provides the user with an unified platform of access to the different CPIs at a low cost, - using to this end, as a common access protocol, the TPC/IP, on - which the access application of the user to same is installed.

The switching matrices used allow, on the one hand, the CSIV to be connected to telephone stations with signaling E and M, permitting the service to users using the Switched Telephone Network, while on the other hand, they also make possible the connection to stations with signaling ISUS (Integrated Service User Share), so allowing to provide a service through an interface common to those users using the Switched Telephone Network, and those using the Digital Network of Integrated Services (DNIS).

Also, this switching matrix is composed of a DSS1 (Subscriber Digital System No. 1), which is compatible with that accepted by the communications servant, so establishing a call between matrix and servant, the adaptation being carried out between the signaling offered by the network and that accepted by the servant.

The communications servants, through which the user accedes the system, allow the assignment of the IP (Internet Protocol) address for the handshank with a CSIV to be assigned by the same system or a CPI connected to this.

These user access communications servants and the routers for connection with the suppliers permit a whole control by establishing filters on the CPIs with which the user can establish a session, - connection restraints being implemented, as well as having a control on the TCP/IP sessions established by the user.

Also,the possibility that the connection routers with different CPI allow communications to he established of type TCP/IP between a CSIV and the CPIs in a wide range of protocols (X.25, FR, DNIS, - etc.), allows for a unified access platform to the CPIs.

The Management and Operation Terminals supply the necessary mechanisms for connecting the operators, and the access of them to the functional character of the Management Centre (MCIV), depending on the privileges granted to each operator.

The Suppliers Terminals provide the mechanisms necessary for the connection of the suppliers and their access to the functional character of the Management Centre (MCIV), so knowing the information obtained on their CPIs, depending on the privileges granted to each supplier

The Management Centre (MCIV) performs the following tasks:
- Configuring the Centres of Service (CSIV), by entering/removing/ modifying the physical elements composing the CSIV, as well as the configuration of the logic data and application data, such as the services te which they give an access, their suppliers, information on the services guide, etc.

It is possible a dynamic performance of the configuration data while the CSIV is still offering the service.
- Management of alarms generated at the CSIVs. The generation of alarms can be activated or inhibited at the CSIVs if the operator receives all the alarms or none.
- These alarms are classified in several categories according to their importance, being presented to the operator immediately and following a legible format.
- Running quality control, according to the data related to service measures received from the CSIVs. The MCIV elaborates reports at the request of the operator about the units of a centre of service (CSIV) or about a determined unit of said centre of service.
- Accounting Management, being registered information on the use of the services related to the calls made by the users to the CPIs through different SCIV, as well as those addressed to the CPI of suppliers.

The management centre consists of mechanisms for performing selective consultations on a SCIV, in particular, or a supplier, or a service in particular.
- Safety Management, allowing the different operators acceding the system to be defined, assigning them the assembly of operations to be performed and controlled.

Also, at the MCIV, a control of communications is carried out in order to avoid intruder connections, by defining the data terminal units belonging to the MCIV, as well the associates to all the CSIV to be controlled, in the same defined group of users.

Moreover, the system is composed of an Information Centre of Suppliers, which, through hipertext methods, offers the users information on the existing CPIs.

This information is provided by a supplier offering the CPI, and it can be a text, graphic or sound text.

The CPI of information of suppliers provides, also, modernizations of the software connected to the system.

The software of the system takes on the tasks of the all logic of the information system. It is grouped in two parallel planes, one of application, consisting of the applications performed by the service offered by the system, and one of underlying structure, on which the applications act.

Basically, it is structured in the following subsystems, namely:
- The User Terminal has, in the application plane, the software necessary for connecting to the service, selection of the method of access to the CPI, and a telecharge, while in the underlying plane, it is to be mentioned as modules or subsystems, the Operative System, the software of Communications TCP/IP, and an assembly of basic TCP/IP customers as WWW, FTP, Telnet, Mail, etc.
- The Centres of Service are included in the application plane of a module or subsystem of Services of the System, and a module of Data and Communications Resorts, while the underlying plane is conformed by a Distributed Procedure Software, the software of data resorts, the software of Channel Switching,the software of Communications, the Data Storage and the Operative System.
- In the case of the Management Centre, the application plane contemplates a module of Operator Interface, a Configuration module, a Maintenance module, Runnin Quality module, and an Accounting module, while in the underlying plane, there are the Operative System, the software of Communications, the software of Data Storage, the Graphic Interface, and the Distributed Processing.

Likewise, the own method of validation and assignment of user addresses, for the assignment of IP (Internet Protocol) addresses to the user, is fundamentally different from this information system of the existing ones.

Said method of validation and asignment of IP (Internel Protocol) addresses consists of using units admitting a DNIS signaling and STN, to support the routing IP (Internet Protocol) direct, the destination of the trame being not considered, and sending all the trame of a user to a sole address, which is determined at the moment of the connection. The computer of the corresponding centre of service performs the call treatment and the configuration of the routers/filters IP (Internel Protocol) associated to each call.

The services to which it is possible to accede through the defined structure can be grouped in to different types:
- Identified Services, in which the entry to the system is to be previouslY validated by the supplier to which it is desired to accede. In these services, it can be established a difference amongst those designating, moreover, an IP (Internet Protocol) address to the user (generally access suppliers to Internet), and those not designating it (authenticated services but with IP (Internet Protocol) addresses of the system).

The access method implemented on the basis of the structure of the invention, allows to offer the user accesses to an environment of multisuppliers of Internet.

To carry out this objective:
- The system offers a user connection to different suppliers having simultaneously an access to Internet. The user has a sole access in which his "login" and the supplier with whom he is registered are indicated, by using a composed word.
- The suppliers having access to Internet identify the users desiring to be connected, and for this purpose the system transfers the requests for an access to the supplier choosen by the user.
- After identifying the user, the suppliers having access to Internet assign him an IP (Internet Protocol) address (belonging to the range of addresses controlled by said supplier).

Since a same supplier can be connected to different centres of service, the assignment is carried out from a pool associated to each of them.
- The system guarantees that all the IP (Internet Protocol) trames of a user connected to an Internet supplier, are exclusively sent to said supplier (previously validated by the user and assigned with an IP (Internet Protocol) address.

To this end, a routing based on the origin of the trames (both on the access unit to the system, and in the outler ones) is carried out.
- When a user ends a connection, the system informs this situation to the suppliers in order that this performs the tariff functions on the user.
- Non-Identified Services, into which the user enters in an anonymous way, and can navigate over all the services of this type.

In this case, the user desiring to enter the system must send from his PC only the name of the CPI to which he desire to be connected. The user requests are treated, in this case, fully by the units of the system, selecting an IP (Internet Protocol) address from the system for the user, and establishing a connection with the supplier (enabling a temporary route).

The user identifies himself with a composed word indicating his name and the associated supplier.

### BRIEF DESCRIPTION OF THE DRAWINGS

In order to complement this description and to aid to a better understanding of the characteristics of the invention, the appending drawings, which are a part of this specification, show, by - way of illustrative and non-limiting example, the following figures:

Figure 1 shows a general structure of the Information System of the invention.

Figure 2 corresponds to a structure of an Information Service - Centre.

### DETAILED DESCRIPTION OF THE PREFERRED EMBODIMENT

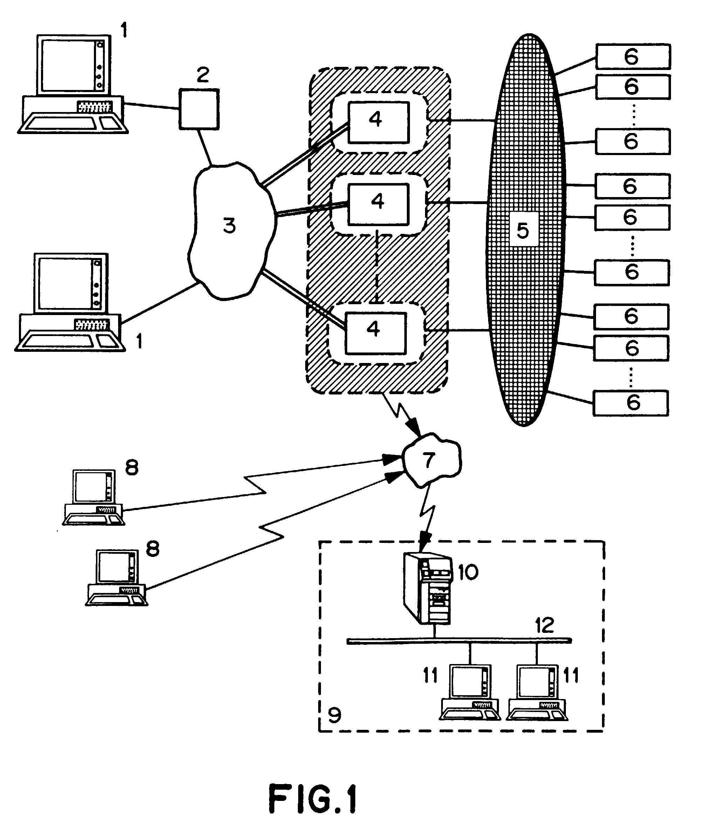

From Fig. 1, it can be seen how the structure for an Electronic Information System of the invention is constituted starting from some User Terminals (1), connected to the User Access Network (3), either by means of a modem (2), for connecting through the Switched Telephone Network (STN), or an access line of the Digital Network of Integrated Services (DNIS).

This access is, expressed in concrete terms, a physical circuit with a Centre of Service (4), or system node, the existence of several centres being possible, which are distributed according to geographical criteria.

The Access Network (5) of the Centres Providing Information allows a connection amongst the Centres of Service (4) and several Centres Providing Information (6)

Both the Package Switching Network (IBERPAC) and the Digital Network of Integrated Services (DNIS), as well as dedicated voice + data lines (IBERMIC), can be used as access network.

The Management Centre (9) is constituted by a Local Area Network Ethernet (12), which is connected to a Main Computer (10) having a high process and storage capacity, which supports the remote management of different Centres of Service (4) of the System, via a TCP/ IP network on X.25.

The Management and Operation Terminals (11) act as consoles for performing operation, maintenance and management tasks.

Likewise, the system allows the Centre Providing Information, thru a series of Terminals (8) associated to the Centre Providing Information, to gain a remote access to the Management Centre (9) thru - the TCP/IP network, mounted on X.25 (7).

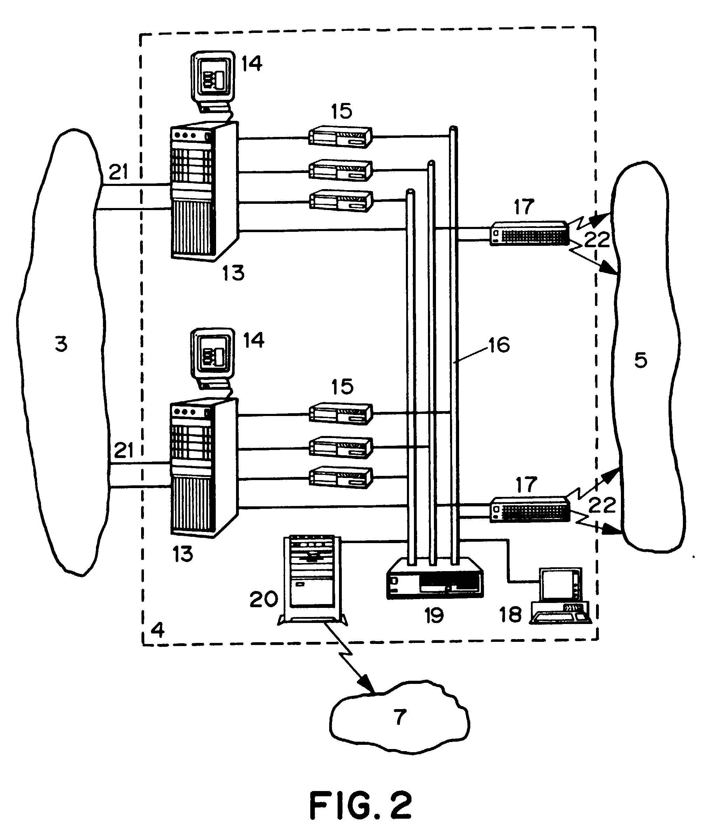

Figure 2 shows the structure of a Centre of Service, where a series of segment of the Local Area Network Ethernet (16), joined by a concentrator (19), allow different units of the Centre to be interconnected.

Among these units, there are multiline units or switching matrices (13), which establish, under control of the Centre main computer (20), temporary connections between inlet channels from the user access networks (3), and outlet channels from each of the communications servants (15).

The establishment of a user channel is performed through a signaling with which the access network (3) and the Centre of Service communicate, this unit (15) performing an adaptation of the signaling offered by the network and that treated by the communication servant.

Said signaling can be E and M (21), allowing, moreover, connections of stations with ISUS (Integrated Service User Share) signaling (21), so rendering services via an interface common to users STN and DNIS.

The communications servant (15) sets, in the stage of connection to the system on the part of a user (1), a handshake with a Centre Providing Information (6) asking it to be assigned an IP (Internet Protocol) address of its own, and later to route toward the access to the CPI all the IP (Internet Protocol) trames of the user.

The Main Computer (20), a commercial computer, supervises the user accesses (1) to different CPIs (6).

The Local Installation Terminal (18) fuction is the installation and configuration of the Centre of Service and each of its integral units.

To this end, each multiline unit (13) consists of a console for controlling the configuration and application (14), connected to the Centre of Service (20) via the Local Network (16).

The routing for connecting TCP/IP to the Centres Providing Information (6) and the Management Centre (9) is performed by aids of routers (17) performing PPP (Point to Point Protocol)(22).

It is not considered necessary to extend this description for any expert in the art to understand the scope of the invention - and the advantages derived from it.

The materials, shape, size and arrangement of its components will be open to variation, provided that it does not imply any alteration to the essence of the invention.

The terms under which this specification has been described should be always taken in an ample and non-limitative sense.

## Claims

1. A struture for an Electronic Information System, constituted by an access network (3) for users (1), an access network (5) for information suppliers (6), centres of service (4), and a sole management centre (9), characterized in that the access network (3) of users (1) is a switched telephone network or a digital network of integrated services, the access network (5) for information suppliers (6) being a data network, both of package switching and digital of integrated service, or the access being made by means of dedicated voice + data lines, said information suppliers (6) being connected to one or several centres of service (4), said centres of service (4), geographically distributed, performing an adaptation of the signaling from the stations of the Access network (3) of users (1), the management centre (9) being connected to the centres of service (4) thru a TCP/IP network (7) on X.25, this same network (7) being used for connecting terminals (8) associated with the information suppliers (6) to the management centre (9), the communications for interconnecting these elements forming the structure being performed by means of a TCP/IP communications tower.

2. A structure for an Electronic Information System, according to claim 1, characterized in that the centre of service (4) is constituted by a series of multiline units (13) to which consoles (14) for controlling the configuration and application, a communications servant (15), constituted by the necessary modems, and a process and storage computer (20) are connected, all them connected to segments of a local area network (16), joined by a concentrator (19), the - structure of said centre of service being completed with a local - configuration terminal (18) and the necessary routers for the connection of user-information supplier thru a data network (5).

3. A structure for an Electronic Information System, according to any of the preceding claims, characterized in that the management centre is constituted mainly by a local area network (12), a management computer (10), and a series of operation terminals (11), being connected both to de centres of service and to the terminals (8) associated with suppliers, by means of a TCP/IP network (7) on X.25

4. A structure for an Electronic Information System, according to any of the preceding claims, characterized in that the - address assignment and validation method IP (Internet Protocol) implemented consists of sending the whole traffic of a user to a sole address, which is determined at the moment of effecting the connection, the destination of the trame being not considered, so that the direct IP (Internet Protocol) routing is controlled by the centre of service computer in question, and on the basis of a modified protocol of RADIUS, where the user identifies himselft by a composed word indicating his name and the associated supplier.

5. A structure for an Electronic Information System, according to any of the preceding claims, characterized in that on the basis of the address assignment and validation method IP (Internet Protocol) implemented, there are two different types of user access, these being identified services, in which the entry to the system is to be previously validated by the supplier of the service to be acceded and to non-identified services, in which the user enters the system in an anonimous way, and he can navigate over all services of this type.

6. A structure for an Electronic Information System, according to any of the preceding claims, caracterized in that the functional architecture of the system is arranged on the basis of a call control and routing management module, this latter magement being performed by the computers (20) of the centres of service (4) and the module corresponding to the management centre (9) performing all the peculisr functions of service management and operation, generating reports for the proper suppliers of information.
